# FASCICULE DE BREVET EUROPEEN

(11) **EP 0 584 351 B1**
(45) Date de publication et mention de la délivrance du brevet: **04.06.1997**
(21) Numéro de dépôt: 93918742.3
(22) Date de dépôt: 09.03.1993
(51) Int. Cl.: C09K 3/32, C09D 105/04, C09D 105/06

(54) **PROCEDE DE PROTECTION DE SURFACES SOLIDES, PARTICULIEREMENT LES ZONES LITTORALES CONTRE LA POLLUTION PAR HYDROCARBURES**
VERFAHREN ZUM SCHUTZEN VON FESTER OBERFLAECHEN BZW. KUESTEN GEGEN KOHLENWASSERSTOFF VERUNREINIGUNG
PROCESS AFFORDING PROTECTION TO SOLID SURFACES, AND ESPECIALLY COASTAL AREAS, AGAINST HYDROCARBON POLLUTION

(30) Priorité: 11.03.1992 FR 9202886
(43) Date de publication de la demande: 02.03.1994
(73) Titulaire: ELF AQUITAINE, 92400 Courbevoie (FR)
(72) Inventeur: BASSERES, Anne Résidence Deauville, F-64000 Pau (FR); LADOUSSE, Alain Résidence Deauville, F-64000 Pau (FR)
(74) Mandataire: Boillot, Marc
(86) Numéro de dépôt international: FR9300230
(87) Numéro de publication internationale: WO9318109

(56) Documents cités:
- EP-A- 0 048 339
- WO-A-91/01945
- FR-A- 1 583 959
- DATABASE WPIL Derwent Publications Ltd., London, GB; AN 84-241111
- PATENT ABSTRACTS OF JAPAN vol. 008, no. 214 (P-304)29 September 1984

## Description

Cette invention concerne un procédé de protection de surfaces solides et tout particulièrement de zones littorales et berges, contre la pollution par hydrocarbures.

La protection de zones littorales contre l'effet des déversements accidentels d'hydrocarbures est assurée par des moyens mécaniques ou chimiques. Les moyens mécaniques consistent par le déploiement de barrages ou de filets pour éviter que la nappe d'hydrocarbures n'atteigne les berges. Les moyens chimiques visent à fractionner la nappe de brut avant qu'elle n'atteigne les côtes. Les procédés chimiques mettent en oeuvre des dispersants seuls ou bien des absorbants.

Si la pollution par hydrocarbures a déjà atteint le littorale, les procédés mis en oeuvre n'ont qu'un effet curatif. Ils consistent dans le nettoyage des berges par jets d'eau, froide ou chaude ou par pelletage.

Il y a également des procédés physicochimiques utilisant des absorbants ou bien des agents de lavage. On peut compléter ce traitement par l'ajout de substances nutritives dont le rôle est de favoriser le développement des microorganismes responsables de la biodégradation des hydrocarbures. Ce procédé est décrit dans les brevets français 2 490 672 et 2 512 057.

La protection des zones littorales préalables à l'arrivée de la nappe d'hydrocarbures a également été envisagée. Il s'agit de protéger des rochers ou des galets formant les plages par un revêtement qui empêche l'adhésion des hydrocarbures. Parmi les produits testés dans cette application nous pouvons mentionner le silicate de sodium, la gomme de xanthane et l'acétate de polyvinyle. Parmi ces produits, seul l'acétate de polyvinyle a été considéré comme valable pour une telle application (C.L. FOGET et al - Rapport Technique EPA-60012-84-085). Cependant l'utilisation d'un polymère du chlorure de vinyle dans un milieu marin se heurte à des craintes concernant l'effet nocif des traces de monomère que contient inévitablement le polymère. L'effet des autres produits préconisés a été de trop courte durée. Le lessivage des produits par l'eau de mer réduit l'efficacité de la protection pratiquement à la durée d'une marée.

Nous avons trouvé maintenant un procédé qui permet de protéger le littoral de façon durable contre la déposition des hydrocarbures et ceci sans danger pour l'environnement, en utilisant un produit naturel et entièrement biodégradable. Ce procédé peut également être utilisé pour la protection d'autres surface solides, comme des sols en ciment ou matière plastique.

Pour ceci cette invention concerne un procédé de protection de surfaces solides contre le dépôt de matières oléophiles par application aux dites surfaces d'une couche protectrice caractérisé en ce que la surface solide à protéger est composée de sédiments tels que rochers, galets, sables ou marécages présents notamment sur les zones littorales ou les berges de rivières ou de lacs, de ciment ou de matière plastique, et en ce que la couche protectrice est composée d'au moins un polysaccharide renfermant des groupes carboxyle libres, choisi dans le groupe constitué par les alginates et les pectines de degré d'estérification inférieur à 50 pris seuls ou en mélange.

Les alginates sont extraites des algues brunes présentes sur la plupart des côtés rocheuses. Elles sont récoltées principalement dans l'Atlantique Nord, en France sur les Côtes Bretonnes.

Les alginates sont obtenus à partir de ces algues brunes par déminéralisation en milieu acide et extraction de l'alginate en milieu alcalin suivi d'une précipitation de l'acide alginique.

Il est également possible d'utiliser les alginates d'origine bactérienne.

L'acide alginique est un polyuronide, constitué d'un enchaînement de deux acides hexuroniques, l'acide bêta-D-mannuronique et l'acide alpha-L-guluronique.

Les études par hydrolyse partielle et par RMN du carbone 13 ont montré que ces deux monomères sont répartis en blocs d'une vingtaine d'unités. Les différentes algues présentent des proportions acides mannuronique/acide guluronique très variables. On utilise avantageusement les alginates à teneur élevée en acide guluronique.

L'acide alginique étant insoluble dans l'eau, on utilise les alginates hydrosolubles obtenus par neutralisation de l'acide par un composé basique, en général une base alcaline.

Les pectines sont extraites principalement du marc des pommes ou d'écorces de citron par un traitement acide suivi d'une précipitation à l'alcool. La pectine obtenue est essentiellement constituée d'acides alpha-D-galacturoniques partiellement estérifiés- par du méthanol. Elle contient également de petites quantités de bêta-L-rhamnose et de sucres neutres comme la galactose, l'arabinose et le xylose.

Les pectines obtenues après traitement acide et précipitation ont un degré d'estérification supérieur à 50, ce qui signifie que plus de 50% des groupes carboxyle sont estérifiés par du méthanol. Ces pectines appelées "pectines hautement méthylées" ou "HM" ne conviennent pas pour le procédé selon l'invention.

Il est nécessaire de les transformer en "pectines faiblement méthylées" ou "LM" par déméthylation par voie acide ou alcaline. En général on utilise une solution de carbonate de sodium. Les pectines "LM" obtenues ont un degré d'estérification inférieur à 50. On utilise avantageusement des pectines dont le degré d'estérification est inférieur à 40.

Selon le degré de purification aussi bien les alginates que les pectines peuvent être accompagnés d'autres polysaccharides. Ceci ne diminue pas leur efficacité.

Le procédé selon l'invention est particulièrement adapté à la protection des zones littorales contre le déversement accidentel des hydrocarbures. A ce titre il s'agit d'un moyen de lutte efficace contre les "marées noires", et tout déversement d'hydrocarbures en mer.

L'efficacité du film ne disparaît pas après la première marée, mais persiste durant plusieurs jours après l'application. Ceci permet d'envisager une pulvérisation de la berge dans une zone littorale quelques jours avant qu'une marée noire n'atteigne la côte.

Le procédé est également très efficace pour la protection des berges des rivières et des lacs contre le déversement accidentel de matières oléophiles.

Le procédé peut également être appliqué à la prévention de pollution de sols par exemple en ciment ou en matière plastique par des matières oléophiles déversées accidentellement. Ces matières oléophiles peuvent être par exemple des huiles brutes, des huiles de vidange ou des huiles végétales.

La mise en oeuvre du procédé est très simple. Une solution aqueuse de polysaccharide renfermant des groupes carboxyle libres est pulvérisée, grâce à un pulvérisateur classique sur les zones à protéger, de manière à déposer un film le plus complet possible. Ce film diminue l'accrochage des matières oléophiles sur les surfaces solides à protéger.

La concentration des solutions à pulvériser est fonction du polysaccharide utilisé. La concentration la plus efficace est entre 1 et 5g/l et de préférence entre 1,5 et 4,5g/l pour les alginates et entre 5 et 15g/l de préférence entre 8 et 12g/l pour les pectines.

La quantité de liquide à pulvériser est calculée pour permettre le dépôt d'environ 0,5 à 1,5g d'alginate et d'environ 2 à 5g de pectine par m² de surface à protéger.

La formation du film protecteur est favorisée par la présence dans la couche protectrice de 0,1 à 30% poids, et de préférence de 0,5 à 20% poids d'au moins un métal alcalino-terreux, apporté ou déjà présent dans le milieu naturel. De préférence, on utilisera du calcium ou du strontium, présent notamment dans les rochers, galets et l'eau de mer pour les zones littorales, ou encore dans les sols en fibro-ciment.

Quand la surface à protéger ne renferme pas de métaux alcalino-terreux, par exemple les sols en matière plastique, il est préférable d'en ajouter à la solution à pulvériser. En général on ajoute entre 100 et 300mg et de préférence entre 150 et 200mg d'un métal alcalino-terreux sous forme de sel hydrosoluble. Les métaux préférés sont le calcium et le strontium sous forme d'oxydes et de chlorures, pris seuls ou en mélange.

Les exemples suivants illustrent l'invention.

### EXEMPLE 1

Des galets (8-10 cm de diamètre), lavés et séchés, sont disposés sur une grille, elle même installée dans des aquariums à 17 cm de hauteur. Les polysaccharides sont dissous aux concentrations indiquées dans le tableau I puis pulvérisés sur des galets calcaires (leur quantité est contrôlée par pesée). Après 12 heures de séchage, une quantité connue du pétrole (Arabian Light 150) est projetée sur les galets (sa quantité contrôlée par pesée). Un lavage à l'eau froide sous pression est alors effectué et la quantité de pétrole décrochée estimée après récupération avec un absorbant (poudre de polyuréthane), extraction au chloroforme et lecture en IR à 3420 nm.

Les polysaccharides utilisés sont un alginate (SATIALGINE de Sanofi Bioindustries), une pectine HM (MRS-34) et une pectine (LMNA/P 3450 NA95) également de SANOFI.

**TABLEAU 1**

| | Alginate | Pectine LM | | Pectine HM | | Différence avec Témoin |
|---|---|---|---|---|---|---|
| Concentration | 2 g/l | 10g/l | 2g/l | 10g/l | 2g/l | |
| % récupération | 60 % | 60 % | 50% | 47% | 46%- | 46% |
| Témoin | 14 % | 14 % | 4% | 1% | 0 | |

Dans l'essai témoin, les galets n'ont pas de couche protectrice.

Le tableau 1 montre la supériorité de la pectine faiblement méthylée. La concentration la plus efficace est 2g/l pour l'alginate et de 10g/l pour la pectine.

### EXEMPLE 2

Nous avons répété l'exemple 1 en utilisant une plaque de fibrociment à la place des galets.

**TABLEAU 2**

| | Différence avec témoin |
|---|---|
| Pectine-LM 10g/l | 58 % |
| Alginate 2g/l | 58 % |

### EXEMPLE 3 (Arabian Light non vieilli)

L'efficacité de l'alginate (2g/l) et de la pectine (10g/l) est testée dans un simulateur de marée de 25 litres et dont la marée est réglée de manière à correspondre aux marées naturelles. L'eau de mer servant à l'alimentation des bacs est directement prélevée dans l'océan, en continu pendant tous les essais. Elle contient, selon les analyses faites, 380mg/l de calcium. Les bacs sont aménagés avec un récipient central percé pour permettre l'écoulement de l'eau à travers le sédiment à marée basse.

Les sédiments (galets) sont placés dans le récipient central sur une couche de 7 à 10 cm. Le simulateur de marée permet l'immersion alternative des sédiments. Les bacs sont aménagés d'une surverse permettant de récupérer le brut décroché afin qu'il ne se redépose pas sur les sédiments à marée basse.

Sur une quantité de sédiment connue, on pulvérise une quantité connue de produit filmogène, que l'on laisse sécher le temps d'une marée (6 heures). Le brut (Arabian light) est alors déposé sur le sédiment, sa quantité estimée par différence pondérale, et le simulateur de marée est déclenché. A chaque application, un témoin sans produit filmogène est également observé.

L'efficacité du décrochage est évaluée après deux marées (24 h) par estimation de la quantité de brut restée sur le sédiment. Cette quantification est effectuée après extraction au chloroforme, évaporation et pesée. Les résultats des différents essais sont donnés dans le tableau 3.

L'efficacité du produit est exprimée par le taux d'élimination du brut sur le sédiment.

**TABLEAU 3**

| | % Elimination après 2 cycles de marées (24 heures) | Différence avec témoin% |
|---|---|---|
| Alginate (2g/l) | 73,2 | 12,9 |
| Pectine (10g/l) | 78,8 | 7,5 |

### EXEMPLE 4 (Arabian light vieilli et émulsionné)

L'utilisation de brut non vieilli ne correspondant pas à la réalité, il a été décidé de tester l'efficacité des deux produits sur différents états de brut: vieilli et émulsionné. En effet, après un séjour à la surface de l'eau, le brut est vieilli et émulsionné.

Nous avons utilisé un brut vieilli (Arabian Light vieilli 7 jours sous UV) et émulsion inverse d'Arabian Light (35% brut - 65% eau). Les tests d'efficacité sont réalisés dans les mêmes conditions et avec le même protocole que celui décrit lors de l'exemple 3.

Les résultats obtenus sont dans le tableau 4.

**TABLEAU 4**

| Produits filmogènes | % Elimination après deux cycles de marées (24 heures) | Différence avec témoin% |
|---|---|---|
| BRUT VIEILLI | | |
| | | |
| Alginate (2g/l) | 76,1 | 23,0 |
| Témoin | 53,1 | |
| | | |
| Pectine (10g/l) | 76,7 | 26,8 |
| Témoin | 49,9 | |
| | | |
| BRUT EMULSIONNE | | |
| | | |
| Alginate (2g/l) | 73,3 | 30,2 |
| Témoin | 43,1 | |
| | | |
| Pectine (10g/l) | 78,0 | 26,9 |
| Témoin | 51,1 | |

Les résultats obtenus avec l'utilisation de brut vieilli et émulsionné sont meilleurs qu'avec le brut frais. On obtient en effet une différence d'accrochage de 23 à 30% par rapport à un témoin sans produit filmogène.

### EXEMPLE 5

L'utilisation d'une telle invention est réaliste si les produits utilisés forment un film résistant au lessivage des marées pendant un certain temps suffisamment long pour envisager un traitement quelques marées avant que la nappe de pétrole. L'étude de la résistance de ces produits au lessivage est réalisée avec du brut oxydé (Arabian Light) dans le simulateur de marées, dans les mêmes conditions que précédemment.

Seule la durée de l'expérimentation change: une estimation de l'élimination est effectuée après 24h, 48h, 96h (4j), 120h (5j) et 144h (6j).

Les résultats se trouvent dans le tableau 5 ci-après.

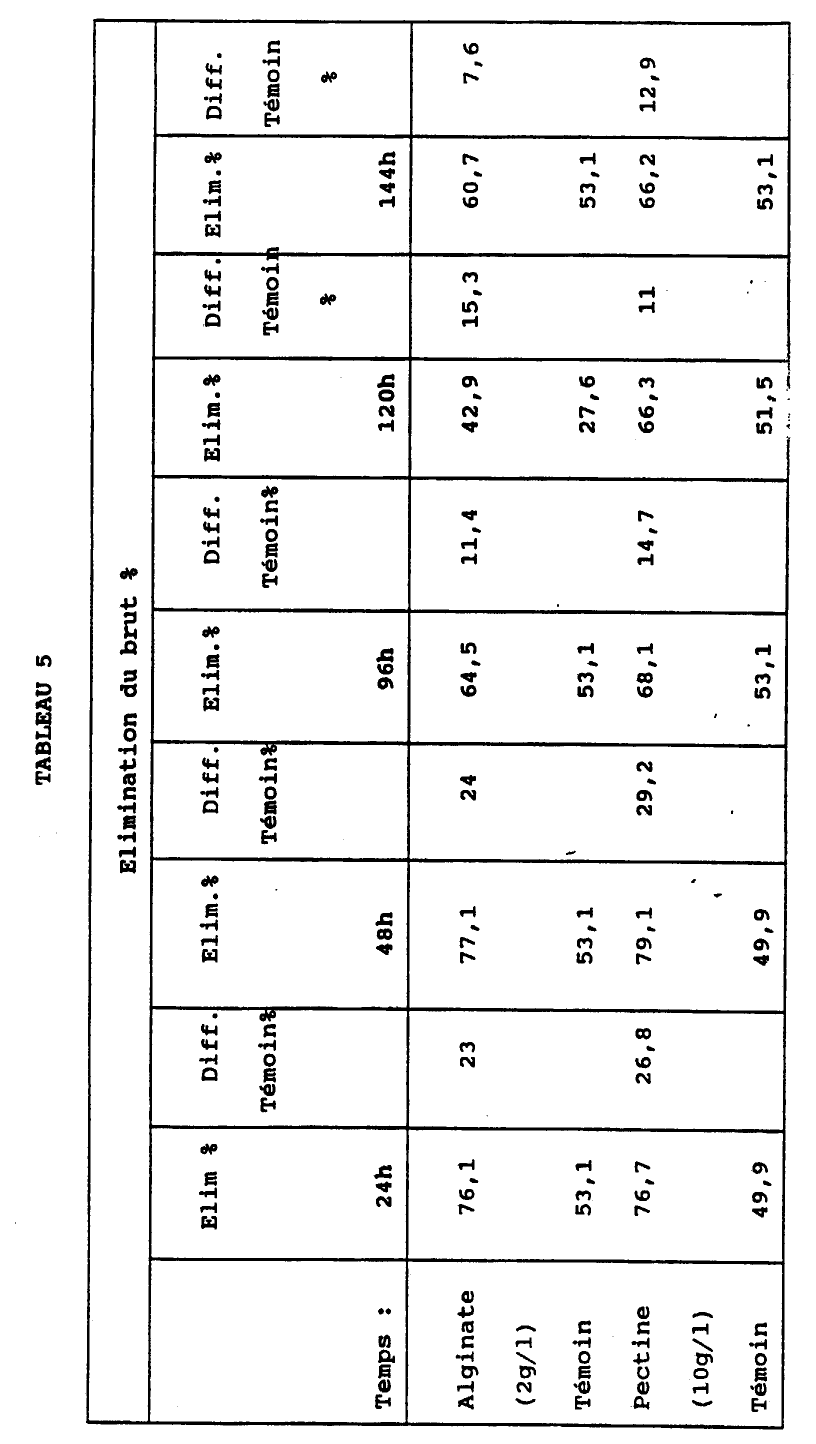

Bien que le produit perde de son efficacité au cours du temps, après 6 jours dans des conditions de marées, l'efficacité reste intéressante: 10% supérieure au témoin. Cette perte d'efficacité est au contraire une preuve que le produit finit par disparaître, grâce à sa nature biodégradable.

### EXEMPLE 6

Afin d'évaluer l'amélioration apportée par la présence de calcium dans la couche protectrice à base d'alginate, deux types d'essais ont été réalisés avec le même appareillage que celui décrit dans l'exemple 3.

Les premiers essais ont été réalisés avec de l'eau de mer, contenant 380mg/l de calcium sous forme saline, en présence de deux types de galets, des galets calcaires et des galets sans calcaire. Les résultats sont donnés dans le tableau 6 ci-dessous :

**Tableau 6**

| Support | % élimination du brut |
|---|---|
| galet calcaire | 85 % |
| galet sans calcaire | 61 % |

Ici la protection assurée par l'alginate est bien supérieure sur le galet calcaire contenant du calcium puisqu'on récupère 24% de plus de pétrole brut que sur les galets sans calcaire.

Dans le deuxième type d'essais, on opère avec des galets sans calcaire,contenant notamment du calcium seule change la nature de l'eau mise en contact : on utilise d'une part de l'eau distillée donc sans calcaire et d'autre part de l'eau distillée additionnée de chlorure de calcium, donc dite calcaire.

Les résultats sont donnés dans le tableau 7 ci-dessous :

**Tableau 7**

| nature de l'eau | concentration en calcium (mg/l) | % élimination |
|---|---|---|
| eau sans calcium | 0 | 54 |
| eau avec calcium | 250 | 72 |

Comme dans les premiers essais, on constate que la présence de calcium, ici dans l'eau, augmente de presque 20% la récupération du pétrole brut et donc l'efficacité de protection par l'alginate.

Ces essais confirment donc l'effet favorable de la présence de calcaire et notamment de calcium sur la protection par les alginates.

## Revendications

1. Procédé de protection de surfaces solides contre le dépôt de matières oléophiles par application aux dites surfaces d'une couche protectrice caractérisé en ce que la surface solide à protéger est composée de sédiments tels que rochers, galets, sables ou marécages présents notamment sur les zones littorales ou les berges de rivières ou de lacs, de ciment ou de matière plastique, et en ce que la couche protectrice est composée d'au moins un polysaccharide renfermant des groupes carboxyles libres, choisi dans le groupe constitué par les alginates et les pectines de degré d'estérification inférieur à 50 pris seuls ou en mélange.

2. Procédé selon la revendication 1 caractérisé en ce que le degré d'estérification de la pectine est inférieur à 40.

3. Procédé selon les revendications 1 ou 2 caractérisé en ce que la matière oléophile est un hydrocarbure et plus particulièrement un pétrole brut.

4. Procédé selon les revendications 1 à 3 caractérisé en ce que la couche protectrice est formée par pulvérisation sur les surfaces solides d'une solution renfermant entre 1 et 5g/l et de préférence entre 1,5 et 4,5g/l d'alginate.

5. Procédé selon les revendications 1 à 4 caractérisé en ce que la couche protectrice est formée par pulvérisation sur les surfaces solides d'une solution renfermant entre 5 et 15g/l et de préférence entre 8 et 12g/l de pectine.

6. Procédé selon les revendications 1 à 5 caractérisé en ce que la couche protectrice renferme entre 0,5 et 1,5g d'alginate par m² de surface à protéger.

7. Procédé selon les revendications 1 à 6 caractérisé en ce que la couche protectrice renferme entre 2 et 5g de pectine par m² de surface à protéger.

8. Procédé selon l'une des revendications 1 à 7 caractérisé en ce que la couche protectrice renferme de O,1 à 30% en poids et de préférence de 0,5 à 20% en poids d'au moins un métal alcalino-terreux.

9. Procédé selon la revendication 8 caractérisé en ce que les métaux alcalino-terreux préférés sont le calcium et le strontium, pris seul ou en mélange.

10. Procédé selon la revendication 8 ou 9 caractérisé en ce que la solution renferme entre 100 et 300mg et de préférence entre 150 et 200mg par litre d'au moins un métal alcalino-terreux, de préférence du calcium ou du strontium, pris seul ou en mélange.

## Patentansprüche

1. Verfahren zum Schutz von festen Oberflächen vor Abscheidung von oleophilen Stoffen durch Aufbringen einer Schutzschicht auf diese Oberflächen, dadurch **gekennzeichnet,** daß die zu schützende feste Oberfläche aus Sedimenten wie Gestein, Kies, Sand oder sumpfigem Terrain, wie sie insbesondere für die Litoralzonen sowie Fluß- oder Seeufer kennzeichnend sind, aus Zement oder Kunststoff zusammengesetzt ist, und die Schutzschicht aus wenigstens einem freie Carboxylgruppen enthaltenden Polysaccharid zusammengesetzt ist, ausgewählt aus der Gruppe, bestehend aus Alginaten und Pectinen, allein genommen oder im Gemisch, mit einem Veresterungsgrad von unter 50.

2. Verfahren nach Anspruch 1, dadurch **gekennzeichnet,** daß der Veresterungsgrad des Pectins unter 40 liegt.

3. Verfahren nach einem der Ansprüche 1 oder 2, dadurch **gekennzeichnet,** daß der oleophile Stoff ein Kohlenwasserstoff und insbesondere Rohöl ist.

4. Verfahren nach einem der Ansprüche 1 bis 3, dadurch **gekennzeichnet,** daß die Schutzschicht durch Zerstäuben einer 1 bis 5 g/l und vorzugsweise 1,5 bis 4,5 g/l Alginat enthaltenden Lösung auf den festen Oberflächen gebildet wird.

5. Verfahren nach einem der Ansprüche 1 bis 4, dadurch **gekennzeichnet,** daß die Schutzschicht durch Zerstäuben einer 5 bis 15 g/l und vorzugsweise 8 bis 12 g/l Pectin enthaltenden Lösung auf den festen Oberflächen gebildet wird.

6. Verfahren nach einem der Ansprüche 1 bis 5, dadurch **gekennzeichnet,** daß die Schutzschicht 0,5 bis 1,5 g Alginat pro m² der zu schützenden Oberfläche enthält.

7. Verfahren nach einem der Ansprüche 1 bis 6, dadurch **gekennzeichnet,** daß die Schutzschicht 2 bis 5 g Pectin pro m² der zu schützenden Oberfläche enthält.

8. Verfahren nach einem der Ansprüche 1 bis 7, dadurch **gekennzeichnet,** daß die Schutzschicht 0,1 bis 30 Gew.-% und vorzugsweise 0,5 bis 20 Gew.-% wenigstens eines Erdalkalimetalls enthält.

9. Verfahren nach Anspruch 8, dadurch **gekennzeichnet,** daß die bevorzugten Erdalkalimetalle, allein genommen oder im Gemisch, Calcium und Strontium sind.

10. Verfahren nach einem der Ansprüche 8 oder 9, dadurch **gekennzeichnet,** daß die Lösung 100 bis 300 mg und vorzugsweise 150 bis 200 mg pro Liter wenigstens eines Erdalkalimetalls, vorzugsweise Calcium oder Strontium, allein genommen oder im Gemisch, enthält.

## Claims

1. Method of protecting solid surfaces against the deposit of oleophilic materials by the application, to said surfaces, of a protective layer characterised in that the solid surface to be protected is made up of sediments such as rocks, boulders, sands or marshes which occur, in particular, on littoral zones or banks of rivers or lakes, or cement or plastic material and in that the protective layer is made up of at least one polysaccharide containing free carboxyl groups, selected from the group consisting of alginates and pectins with a degree of esterification which is less than 50, used by themselves or in a mixture.

2. Process according to Claim 1, characterised in that the degree of esterification of the pectin is less than 40.

3. Process according to Claims 1 or 2, characterised in that the oleophilic material is a hydrocarbon and, more particularly, a crude oil.

4. Process according to Claims 1 to 3, characterised in that the protective layer is formed by spraying a solution containing between 1 and 5 g/l and preferably, between 1.5 and 4.5 g/l of alginate onto the solid surfaces.

5. Process according to Claims 1 to 4, characterised in that he protective layer is formed by spraying a solution containing between 5 and 15 g/l and preferably between 8 and 12 g/l of pectin onto the solid surfaces.

6. Process according to Claims 1 to 5, characterised in that the protective layer contains between 0.5 and 1.5 g of alginate per m² of the surface to be protected.

7. Process according to Claims 1 to 6, characterised in that the protective layer contains between 2 and 5 g of pectin per m² of surface to be protected.

8. Process according to one of Claims 1 to 7, characterised in that the protective layer contains from 0.1 to 30 % by weight, and preferably from 0.5 to 20 % by weight, of at least one alkaline earth metal.

9. Process according to Claim 8, characterised in that the alkaline earth metals which are preferred are calcium and strontium, used either by themselves or in a mixture.

10. Process according to Claim 8 or 9, characterised in that the solution contains between 100 and 300 mg, and, the preference, between 150 and 200 mg per litre of at least one alkaline earth metal, preferably calcium or strontium, used by itself or in a mixture.
